# EUROPEAN PATENT APPLICATION

(11) **EP 4 382 266 A1**
(43) Date of publication of application: **12.06.2024**
(21) Application number: 22853161.2
(22) Date of filing: 04.08.2022
(51) Int. Cl.: B25J 13/08, G06T 7/70

(54) **HOLDING PARAMETER ESTIMATION DEVICE AND HOLDING PARAMETER ESTIMATION METHOD**

(30) Priority: 04.08.2021 JP 2021128476
(71) Applicant: Kyocera Corporation, Kyoto-shi Kyoto 612-8501 (JP)
(72) Inventor: DOI Ryota, Kyoto-shi, Kyoto 612-8501 (JP)
(74) Representative: TBK
(86) International application number: PCT/JP2022/030016
(87) International publication number: WO 2023/013743

(57) **Abstract**

A holding parameter estimation device includes an interface and a controller. The interface acquires information concerning an end effector, holding target information, and depth data. The controller acquires an end effector model based on the information. The controller estimates an opening width of a holder for holding of a holding object by the holder based on the end effector model, the holding target information, and the depth data.

## Description

### CROSS-REFERENCE TO RELATED APPLICATIONS

The present application claims priority from Japanese Patent Application No. 2021-128476 filed on August 4, 2021, the entire contents of which are hereby incorporated by reference.

### TECHNICAL FIELD

The present disclosure relates to a holding parameter estimation device and a holding parameter estimation method.

### BACKGROUND OF INVENTION

A known learning device performs learning for appropriately determining the position and the orientation at which an object is grasped from an image on a computer (for example, refer to Patent Literature 1).

### CITATION LIST

### PATENT LITERATURE

Patent Literature 1: Japanese Unexamined Patent Application Publication No. 2018-205929

### SUMMARY

In a first aspect, a holding parameter estimation device includes an acquirer and a controller. The acquirer acquires information concerning an end effector including a holder for holding a holding object with an arbitrary opening width, holding target information indicating the holding object, and depth data about the holding object. The controller acquires an end effector model indicating an area in which the end effector can exist based on the information to estimate the opening width of the holder for the holding of the holding object by the holder based on the end effector model, the holding target information, and the depth data.

In a second aspect, a holding parameter estimation method includes acquiring information concerning an end effector including a holder for holding a holding object, holding target information indicating the holding object, and depth data about the holding object; acquiring an end effector model indicating an area in which the end effector can exist based on the information; and estimating an opening width of the holder for the holding of the holding object by the holder based on the end effector model, the holding target information, and the depth data.

### BRIEF DESCRIPTION OF THE DRAWINGS

FIG. 1 is a schematic diagram illustrating an example of the configuration of a robot control system according to an embodiment.
FIG. 2 is a side view illustrating an example indicating how a holding object is held by an end effector.
FIG. 3 is a block diagram illustrating an example of the configuration of the robot control system according to the embodiment.
FIG. 4 is a diagram illustrating an example of a mask image representing the outline of the holding object on a plane on which the holding object is held.
FIG. 5A is a diagram illustrating a model representing an opening width between fingers of an end effector model in which a holder has the two fingers.
FIG. 5B is a diagram illustrating a model representing a stroke of the fingers of the end effector model in which the holder has the two fingers.
FIG. 5C is a diagram illustrating an entire model resulting from combination of the opening width and the stroke of the fingers of the end effector model in which the holder has the two fingers.
FIG. 6A is a diagram illustrating a model representing an opening width between fingers of an end effector model in which a holder has the three fingers.
FIG. 6B is a diagram illustrating a first model representing a stroke of the fingers of the end effector model in which the holder has the two fingers.
FIG. 6C is a diagram illustrating a second model representing the stroke of the fingers of the end effector model in which the holder has the two fingers.
FIG. 7 is a diagram illustrating an example of an approach map.
FIG. 8 is a diagram representing how a second area in the approach map is created.
FIG. 9 is a diagram in which an object area and an obstacle area are arranged in the second area during the creation of the approach map.
FIG. 10 is a diagram resulting from an expansion process of the approach map in FIG. 7.
FIG. 11 is a diagram illustrating examples of positions where the end effector model is projected on the approach map.
FIG. 12 is a diagram illustrating a position where the end effector model is capable of being projected on the approach map and a position where the end effector model is not capable of being projected on the approach map.
FIG. 13 is a diagram for describing how to estimate a possible existence area based on the projection of the end effector model on the approach map.
FIG. 14 is a diagram indicating a center position of the possible existence area corresponding to each holder.
FIG. 15 is an external view of the holding object having a special shape.
FIG. 16 is a diagram for describing deviation of the center position of the possible existence area based on the projection of the end effector model on the approach map created for the protection object in FIG. 15 from a moving straight line.
FIG. 17 is a diagram describing how an opening width model is created based on an estimated opening width.
FIG. 18 is a diagram illustrating an example of a surrounding environment map.
FIG. 19A is a diagram illustrating an object map representing the center of the holding object.
FIG. 19B is a diagram illustrating the object map representing the degree of priority of a holding position specified by a user.
FIG. 20 is a diagram illustrating an example of a contact map.
FIG. 21 is a flowchart indicating an example of a process in a holding parameter estimation method.
FIG. 22 is a flowchart indicating an example of a process in which the holding position estimated in the holding parameter estimation method in FIG. 21 is modified for learning.

### DESCRIPTION OF EMBODIMENTS

Embodiments of a holding parameter estimation device to which the present disclosure is applied will herein be described with reference to the drawings.

### (Example of configuration of robot control system 100)

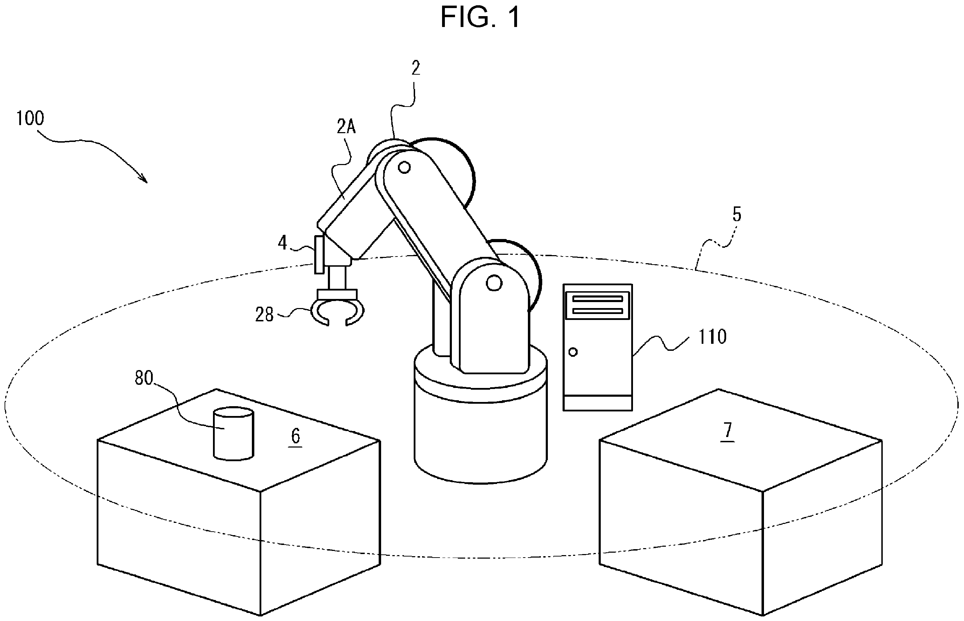

As illustrated in FIG. 1, FIG. 2, and FIG. 3, in an embodiment of the present disclosure, a robot control system 100 includes a robot 2, a camera 4, a robot control apparatus 110, and a holding parameter estimation device 10. The robot 2 holds a holding object 80 with an end effector 2B for work. The robot control apparatus 110 controls the robot 2. For the holding of the holding object 80 by the robot 2, the holding parameter estimation device 10 estimates an opening width of the end effector 2B, which is described below, and the position where the end effector 2B is in contact with the holding object 80 when the robot 2 holds the holding object 80, which is a holding position, and outputs the opening width and the holding position to the robot control apparatus 110.

In the present embodiment, the robot 2 holds the holding object 80 positioned on a start working table 6. In other words, the robot control apparatus 110 controls the robot 2 so that the robot 2 holds the holding object 80 on the start working table 6. The robot 2 may move the holding object 80 from the start working table 6 to a target working table 7. The holding object 80 is also referred to as a work target. The robot 2 operates within an operation range 5.

### <Robot 2>

The robot 2 has an arm 2A and the end effector 2B. The arm 2A may be configured as, for example, a six-axis or seven-axis vertical articulated robot. The arm 2A may also be configured as a three-axis or four-axis horizontal articulated robot or selective compliance assembly robot arm (SCARA) robot. The arm 2A may also be configured as a two-axis or three-axis Cartesian robot. The arm 2A may also be configured as a parallel link robot or the like. The number of the axes composing the arm 2A is not limited the ones described above. In other words, the robot 2 has the arm 2A having multiple j oints that are connected and operates in response to driving of the joints.

The end effector 2B may include, for example, a gripper capable of holding the holding object 80 with an arbitrary opening width. The gripper has at least one holder. Each holder may be movable in a certain direction.

The holder may be in contact with the holding object 80 when the holder holds the holding object 80. The holder may have one or more joints. The holder may be, for example, two or more fingers with which the holding object 80 is picked up and held. The fingers may be composed of movable members that are opposed to each other. Alternatively, the holder may be at least one absorber that absorbs the holding object 80 for holding or a scooping hand capable of scooping the holding object 80. The end effector 2B is not limited to the above examples and may be configured so as to be capable of performing various other operations. In the configuration illustrated in FIG. 1, the end effector 2B includes the gripper.

The robot 2 is capable of controlling the position of the end effector 2B by operating the arm 2A. The end effector 2B may have an axis on which the direction in which the end effector 2B works with respect to the holding object 80 is based. When the end effector 2B has the axis, the robot 2 is capable of controlling the direction of the axis of the end effector 2B by operating the arm 2A. The robot 2 controls start and termination of the operation of the end effector 2B for the holding object 80. The robot 2 is capable of moving or processing the holding object 80 by controlling the operation of the end effector 2B while controlling the position of the end effector 2B or the direction of the axis of the end effector 2B. In the configuration illustrated in FIG. 1, the robot 2 causes the end effector 2B to hold the holding object 80 on the start working table 6 to move the end effector 2B to the target working table 7. The robot 2 causes the end effector 2B to release the holding object 80 on the target working table 7. The robot 2 is capable of moving the holding object 80 from the start working table 6 to the target working table 7 in the above manner.

### <Camera 4>

In the example of the configuration illustrated in FIG. 1, the robot control system 100 includes the camera 4 mounted to the end effector 2B of the robot 2. The camera 4 captures an image of the holding object 80. The camera 4 may capture an image of the holding object 80, for example, from the direction in which the end effector 2B holds the holding object 80. The image of the holding object 80 is also referred to as a holding target image. The camera 4 includes a depth sensor and is capable of acquiring depth data about the holding object 80 with the depth sensor. The depth data is data about the distance in each direction within the angle of view of the depth sensor. More specifically, the depth data may be information concerning the distance from the camera 4 to a measurement point. The image captured by the camera 4 may include monochrome luminance information or luminance information about the respective colors represented by red, green, and blue (RGB) or the like. The number of the cameras 4 is not limited to one and two or more cameras 4 may be provided. The camera 4 may capture an image of another object positioned within a predetermined range from the holding object 80 as an image of an obstacle and may acquire the depth data about the obstacle. The camera 4 is not limited to the configuration in which the camera 4 is mounted to the end effector 2B and may be provided in an arbitrary position at which an image of the holding object 80 is capable of being captured. In a configuration in which the camera 4 is mounted to a structure other than the end effector 2B, the holding target image may be subjected to image composition based on the image captured by the camera 4 mounted to the structure. The holding target image may be subjected to the image composition through image conversion based on the relative position and the relative orientation of the end effector 2B with respect to the mounting position of the camera 4 and the orientation of the camera 4. Alternatively, the holding target image may be generated through computer-aided design (CAD) and from drawing data.

### <Holding parameter estimation device 10>

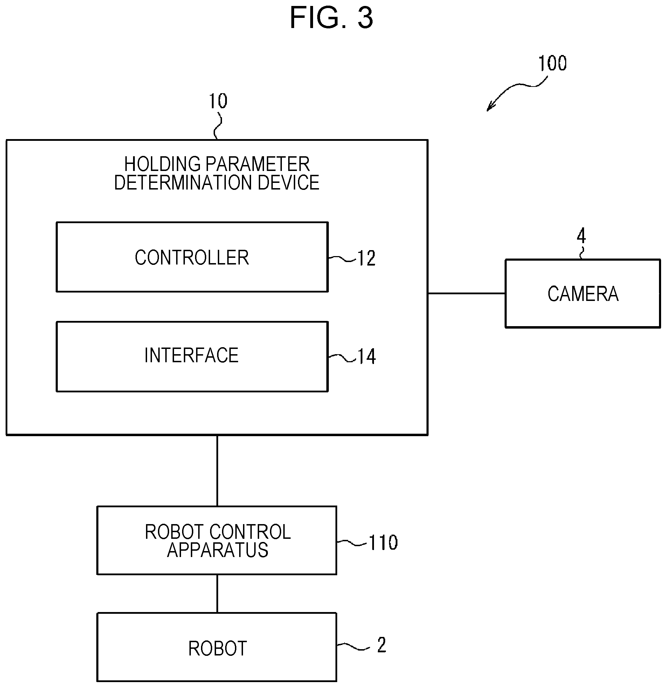

As illustrated in FIG. 3, the holding parameter estimation device 10 includes a controller 12 and an interface (acquirer) 14.

The controller 12 may include at least one processor to provide control and processing capabilities for performing various functions. The processor may execute programs that realize the various functions of the controller 12. The processor may be realized as a single integrated circuit (IC). The processor may be realized as multiple integrated circuits and discrete circuits that are connected so as to be capable of communication. The processor may be realized based on various other known techniques.

The controller 12 may include a storage. The storage may include an electromagnetic storage medium, such as a magnetic disk, and/or a memory, such as a semiconductor memory or a magnetic memory. The storage stores a variety of information. The storage stores the programs and so on, which are executed by the controller 12. The storage may be configured as a non-temporary readable medium. The storage may function as a working memory of the controller 12. At least part of the storage may be configured separately from the controller 12.

The controller 12 estimates the opening width when part of the end effector is displaced to cause the robot 2 to hold the holding object 80 based on information or data acquired by the interface 14. The opening width is the position where the portion that is in contact with the holding object 80 in the holding by the holder is opened in a certain direction with respect to a reference position. The reference position is the most closed position in the certain movable direction. The most closed position is, for example, a displaceable end at a side where the holding object is capable of being absorbed in the certain direction in the configuration including at least one holder. The most closed position is, for example, a displaceable end at a side where one holder comes close to another holder in the configuration including the multiple holders.

The estimation of the opening width is based on an end effector model, holding target information, and the depth data. The end effector model and the holding target information are described below. The holding target information is information indicating the position of the holding object in image capturing by the camera and is, for example, the holding target image serving as information. The holding target image in the following description is described as an embodiment of the holding target information and may include information that is not limited to the image. The controller 12 may further estimate the holding position where the holding object 80 is held by the robot 2 based on the information or data acquired by the interface 14.

The interface 14 acquires information or data about the holding object 80 and so on from an external apparatus. The interface 14 may include an input device that accepts an input of the information, the data, or the like from a user. The input device may include, for example, a touch panel or a touch sensor, or a pointing device, such as a mouse. The input device may include physical keys. The input device may include an audio input device, such as a microphone.

The interface 14 acquires the holding target image of the holding object 80, which is captured by the camera 4, and the depth data associated with the holding target image. The interface 14 acquires information concerning the end effector 2B from, for example, the robot 2 or the input device.

The interface 14 may further output information or data to the external apparatus. The interface 14 may output the opening width of the end effector 2B, which is estimated by the controller 12. The interface 14 may output the holding position where the holding object 80 is held, which is estimated by the controller 12.

The interface 14 may output information or data to the user so that the user recognizes the information or the data. The interface 14 may include an output device that outputs information, data, or the like to the user. The interface 14 may present the estimation result to the user with the output device, for example, when the control of the robot using the estimated opening width and so on is to be performed, to accept an instruction about whether to perform the control from the user. The instruction from the user may be acquired with the input device described above. The holding parameter estimation device 10 may output the estimated opening width and so on to the robot control apparatus 110 without accepting the instruction from the user, which is based on the estimation result of the estimated opening width.

The output device may include a display device that outputs visual information, such as an image, characters, or graphics. The display device may include, for example, a liquid crystal display (LCD), an organic electroluminescence (EL) display, an inorganic EL display, or a plasma display panel (PDP). The display device is not limited to the above displays and may include displays of various other methods. The display device may include a light-emitting device, such as a light emission diode (LED) or a laser diode (LD). The display device may include various other devices. The output device may include, for example, an audio output device, such as a speaker, which outputs audio information including sound. The output device is not limited to the above examples and may include various other devices.

The interface 14 may include a communication device capable of communication in a wired manner or a wireless manner. The communication device may be configured so as to be capable of communication using communication methods based on various communication standards. The communication device is capable of being configured using a known communication technology.

### <Robot control apparatus 110>

The robot control apparatus 110 may acquire information identifying the opening width from the holding parameter estimation device 10. The robot control apparatus 110 may control the robot 2 so that the end effector 2B is opened at the estimated opening width in the displacement of part of the end effector 2B to an approach area described below. The robot control apparatus 110 may further acquire information identifying the holding position from the holding parameter estimation device 10. The robot control apparatus 110 may control the robot 2 so that the robot 2 holds the holding object 80 at the estimated holding position.

The robot control apparatus 110 may include at least one processor to provide control and processing capabilities for performing various functions. Each component in the robot control apparatus 110 may include at least one processor. Multiple components in the respective components in the robot control apparatus 110 may be realized by one processor. The entire robot control apparatus 110 may be realized by one processor. The processor can execute programs realizing the various functions of the robot control apparatus 110. The processor may be configured so as to be the same as or similar to the processor used in the holding parameter estimation device 10.

The robot control apparatus 110 may include a storage. The storage may be configured so as to be the same as or similar to the storage used in the holding parameter estimation device 10.

The robot control apparatus 110 may include the holding parameter estimation device 10. The robot control apparatus 110 may be configured separately from the holding parameter estimation device 10.

### (Example of operation of robot control system 100)

The robot control system 100 controls the robot 2 using the robot control apparatus 110 to cause the robot 2 to perform the work. In the present embodiment, the work to be performed by the robot 2 includes an operation for holding the holding object 80. The work to be performed by the robot 2 may further include an operation to hold the holding object 80. In the robot control system 100, the holding parameter estimation device 10 estimates the opening width in the displacement of the end effector 2B toward the holding object 80. The robot control apparatus 110 may control the robot 2 so that the end effector 2B is opened at the estimated opening width. In the robot control system 100, the holding parameter estimation device 10 may further estimates the holding position of the holding object 80 by the robot 2. The robot control apparatus 110 may control the robot 2 so that the robot 2 holds the holding object 80 at the holding position.

The controller 12 may estimate a combination of the positions where the holders are in contact with the holding object 80 when the holders grip the holding object 80 as the holding position in the configuration in which the end effector 2B has the two or more fingers as the holders. The controller 12 may estimate the position where the absorber is in contact with the holding object 80 when the end effector 2B absorbs the holding object 80 as the holding position in the configuration in which the end effector 2B has the absorber as the holder.

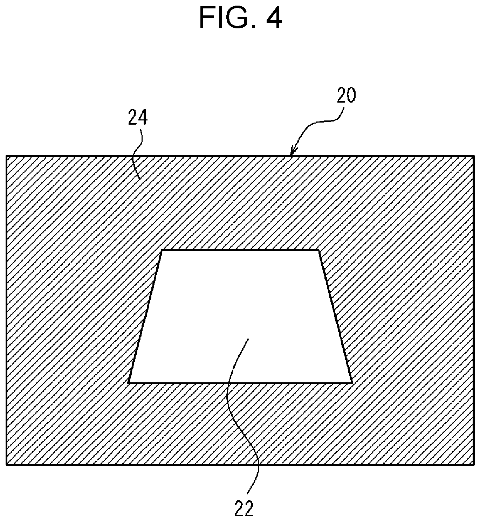

The holding parameter estimation device 10 acquires the holding target image of the holding object 80, which is captured by the camera 4, and the depth data about the holding object 80 via the interface 14. The controller 12 recognizes the outline and the position of the holding object 80 based on the holding target image and the depth data. The controller 12 generates a mask image 20 representing the recognition result of the holding object 80 when the holding object 80 is viewed from the camera 4 mounted to the end effector 2B, as illustrated in FIG. 4. The mask image 20 includes a window 22 representing the area in which the holding object 80 exists when viewed from the camera 4 and a mask 24 representing the area excluding the window 22. Referring to FIG. 4, the window 22 is represented as a white area. Referring to FIG. 4, the mask 24 is represented as an area with positive slope hatching. Although the portion corresponding to the mask 24 in the mask image 20 is represented as the hatched area for convenience of illustration on the drawing, the portion may be represented as a black area in the practical aspect. Alternatively, the coloring of the portion corresponding to the window 22 and the portion corresponding to the mask 24 may be reversed in the mask image 20. Alternatively, the coloring and the hatching of the respective portions of the window 22 and the mask 24 may be reversed in the mask image 20.

The controller 12 acquires the information concerning the end effector 2B via the interface 14. The information concerning the end effector 2B includes, for example, information identifying the maximum value of the spacing between the gripping holders, the thickness of each holder, the width of each holder, and so on. The thickness of the holder is the length in the opening-closing direction of the holder. The width of the holder is the length in a direction perpendicular to the opening-closing direction of the holder. The controller 12 may create an end effector model 30 based on the information concerning the end effector 2B. The end effector model 30 indicates the area in which the end effector 2B can exist. The controller 12 may acquire the end effector model 30 as the information concerning the end effector 2B via the interface 14.

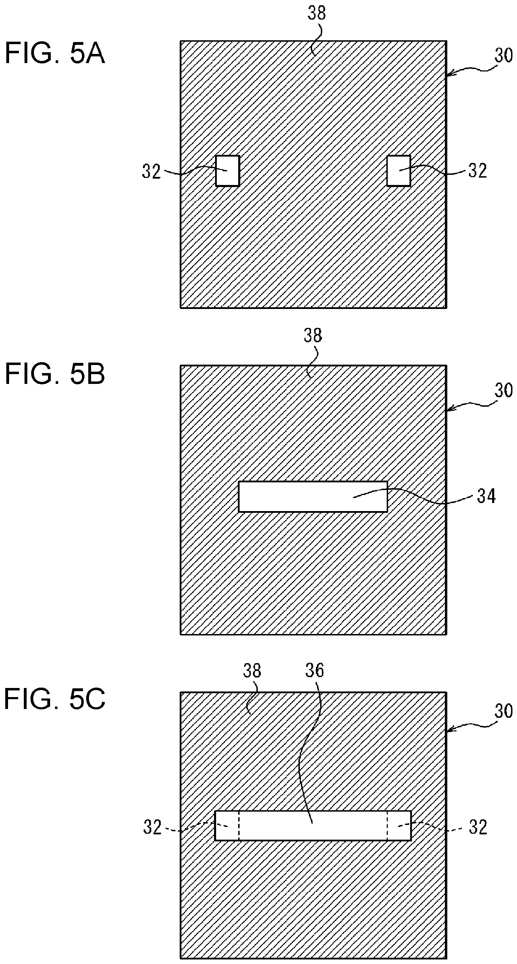

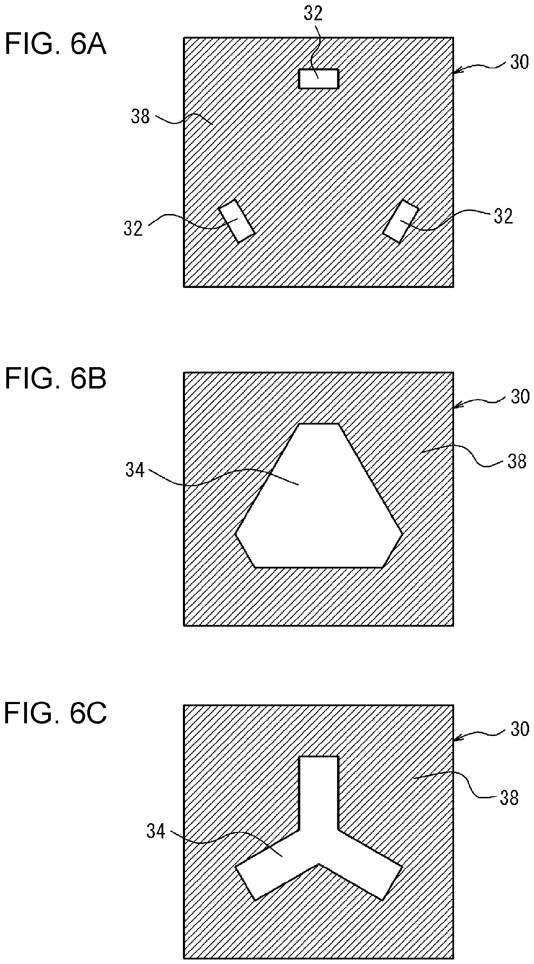

The end effector model 30 when the holder includes two fingers includes a holder model that identifies holder positions 32 and an out-of-operation range 38, as illustrated in FIG. 5A. The holder positions 32 represent the ranges when the holders of the gripper are positioned with a certain spacing and the out-of-operation range 38 represents the range excluding the holder positions 32. In the case of the end effector model 30 when the holder includes three fingers, the end effector model 30 may include a holder model that identifies the holder positions 32 representing the ranges when the holders of the gripper are positioned with a certain spacing and the out-of-operation range 38 representing the range excluding the holder positions 32, as illustrated in FIG. 6A. In other words, the holder model represents the opening width between the holders of the gripper. The holder positions 32 may represent the ranges when the holders are positioned with the maximum spacing. In this case, the holder model represents the maximum opening width between the holders. The holder models illustrated in FIG. 5A and FIG. 6A each represent the maximum opening width between the holders. The holder positions 32 are represented as white areas. The out-of-operation range 38 is represented as an area with positive slope hatching. Although the out-of-operation range 38 is represented as the hatched area for convenience of illustration on the drawing, the out-of-operation range 38 may be represented as a black area in the practical aspect. Alternatively, the coloring of the portion corresponding to the holder positions 32 and the portion corresponding to the out-of-operation range 38 may be reversed. Alternatively, the coloring and the hatching of the respective portions of the holder positions 32 and the out-of-operation range 38 may be reversed.

The end effector model 30 when the holder includes two fingers includes a stroke model that identifies a stroke range 34 representing the range in which the holders of the gripper operate, as illustrated in FIG. 5B. In the case of the end effector model 30 when the holder includes three fingers, the end effector model 30 may include a stroke model that identifies the stroke range 34 representing the range in which the holders of the gripper operate, as illustrated in FIG. 6B or FIG. 6C. The stroke range 34 is represented as a white area. The out-of-operation range 38 is represented as an area with positive slope hatching. Although the out-of-operation range 38 is represented as the hatched area for convenience of illustration on the drawing, the out-of-operation range 38 may be represented as a black area in the practical aspect. Alternatively, the coloring of the portion corresponding to the stroke range 34 and the portion corresponding to the out-of-operation range 38 may be reversed. Alternatively, the coloring and the hatching of the respective portions of the stroke range 34 and the out-of-operation range 38 may be reversed.

The end effector model 30 includes an entire model resulting from combination of the holder model in FIG. 5A and the stroke model in FIG. 5B, as illustrated in FIG. 5C. The entire model identifies an operation range 36 of the holders. The operation range 36 of the holders includes the holder positions 32. Although the portions corresponding to the holders in the operation range 36 of the holders are discriminated with broken lines in FIG. 5C, the portions may not be discriminated in the practical aspect. In addition, although the end effector model 30 represents the range in which the holders are positioned with the maximum spacing (the maximum opening width) in the present embodiment, the end effector model 30 is not limited to this. The end effector model 30 may represent a range in which the holders of the gripper are positioned with an arbitrary spacing (a certain spacing). For example, the end effector model 30 may represent the spacing between the holders of the gripper, which corresponds to the size of the object which the end effector 2B is to grip.

The controller 12 may create only the entire model as the end effector model 30. In this case, the information identifying the holder positions 32 may be associated with the entire model to identify the holder positions 32. The information identifying the holder positions 32 may include numerical values representing feature points of the holders.

In the configuration in which the holder includes the absorber, the end effector model 30 is configured as a model that defines a range in which the absorber interferes with another object when the absorber absorbs the holding object 80.

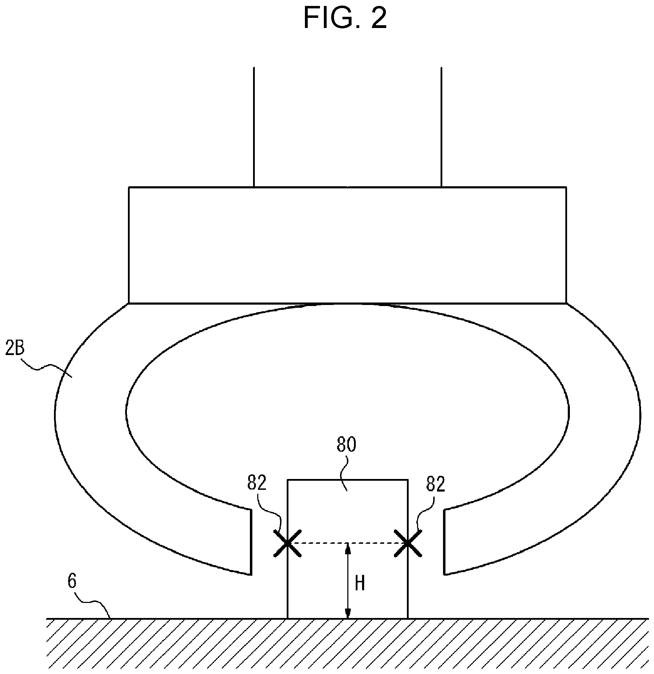

The controller 12 sets a height at which the holding object 80 is held based on the depth data about the holding object 80. Specifically, the controller 12 sets the height from the start working table 6 as the position where the holding object 80 arranged on the start working table 6 is held, as illustrated in FIG. 2. Referring to FIG. 2, the positions where the holding object 80 is held and gripped with the holders of the end effector 2B are represented as holding points 82. The height of the holding points 82 from the start working table 6 is represented as H. The controller 12 sets H as the height at which the holding object 80 is held. The controller 12 sets the height at which the holding object 80 is held to a value lower than the distance from the start working table 6 to a highest point of the holding object 80 based on the depth data about the holding object 80. The controller 12 may set the height at which the holding object 80 is held to a value about half of the height of the holding object 80.

The controller 12 may generate the mask image 20 based on the height at which the holding object 80 is held and the depth data about the holding object 80. Specifically, the controller 12 may generate the mask image 20 having the window 22 of a cross-sectional shape of the holding object 80 along a plane at the height at which the holding object 80 is held.

The controller 12 may create an approach map for identifying the opening width when part of the end effector 2B is displaced to hold the holding object 80. The controller 12 may create the approach map based on the holding target image and the depth data.

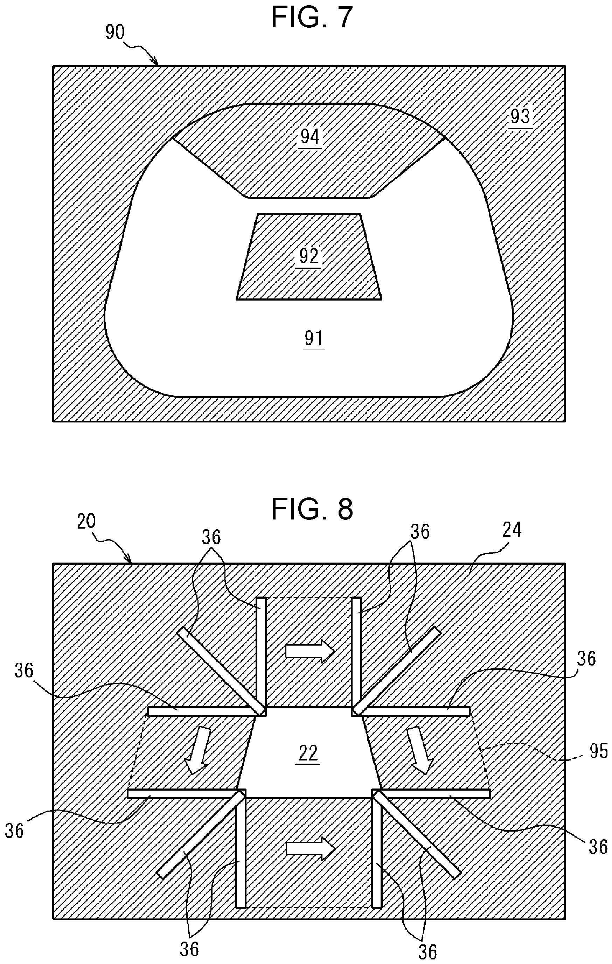

As illustrated in FIG. 7, an approach map 90 may at least indicate an approach area 91. The approach map 90 may further indicate an object area 92, a non-approach area 93, and a first area 94. The approach area 91 is an area in which the end effector 2B can be opened without interference with an object other than the holding object 80 at the height at which the holding object 80 is held. The object area 92 is an area in which the holding object 80 exists. The non-approach area 93 is an area outside a second area described below and is the remaining area resulting from exclusion of the approach area 91, the object area 92, and the first area 94 from the entire area of the approach map 90. The first area 94 is an area directed to the opposite side of the holding object 80 from an outer edge facing the holding object 80 in the area in which an object other than the holding object 80, that is, an obstacle exists. The approach area 91 is represented as a white area. The object area 92, the non-approach area 93, and the first area 94 are represented as areas with positive slope hatching. Although the object area 92, the non-approach area 93, and the first area 94 are represented as the hatched areas for convenience of illustration on the drawing, the object area 92, the non-approach area 93, and the first area 94 may be represented as black areas in the practical aspect. Alternatively, the coloring of the portion corresponding to the approach area 91 and the portion corresponding to object area 92, the non-approach area 93, and the first area 94 may be reversed. Alternatively, the coloring and the hatching of the respective portions of the approach area 91 and the object area 92, the non-approach area 93, and the first area 94 may be reversed.

The controller 12 may generate the second area based on the mask image 20 to create the approach map 90. The second area is an area in which the end effector 2B can be opened without interference with the holding object 80 around the holding object 80, focusing on only the holding object 80. In other words, the second area may be an area having the maximum opening width of the holder of the end effector 2B from the outer edge of the holding object 80. The controller 12 may generate the second area through convolution of the end effector model 30 with respect to the mask image 20. More specifically, the controller 12 may move the operation range 36 of the holder so that at least part of the operation range 36 of the holder identified in the end effector model 30 is overlapped with the window 22 included in the mask image 20. In the movement of the operation range 36 of the holder, the rectangle representing the operation range 36 of the holder can be rotated in various angles for arrangement, for example, so that at least part of the rectangle is overlapped with an upper left corner point of the window 22. The controller 12 may generate an area in which the operation range 36 of the holder passes through when the operation range 36 of the holder is moved as the second area. Referring to FIG. 8, a locus drawn by a point farthest from the window 22 when the operation range 36 of the holder is moved is represented as boundaries 95 of the second area. The boundaries 95 are represented by broken lines.

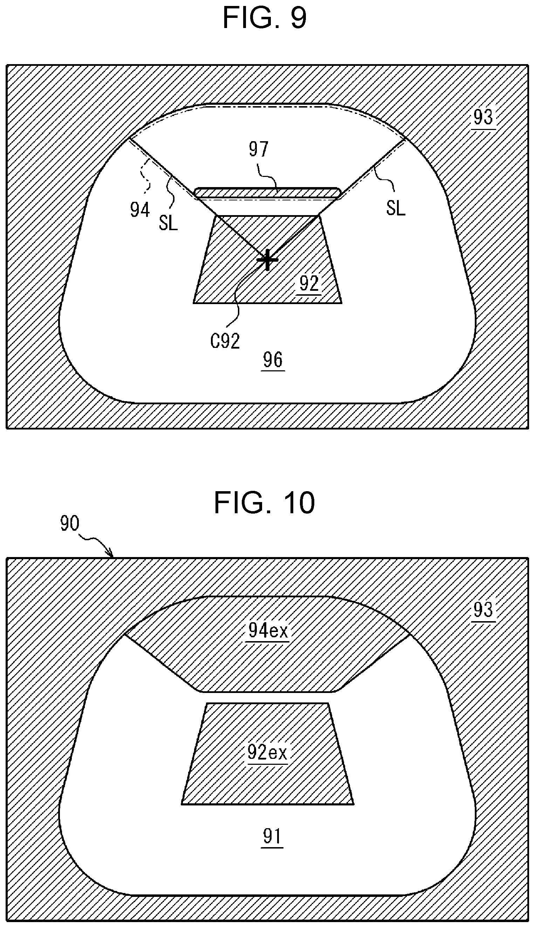

As illustrated in FIG. 9, the controller 12 generates the object area 92 in a second area 96 that is generated based on the depth data about the holding object 80. The controller 12 generates the range in which the holding object 80 exists at a position higher than the height at which the holding object 80 is held as the object area 92. The controller 12 arranges an obstacle area 97 in the generated second area 96 based on the depth data about an object other than the holding object 80. The controller 12 generates the range in which an object other than the holding object 80 exists at a position higher than the height at which the holding object 80 is held as the obstacle area 97.

The controller 12 generates the first area 94 based on the object area 92 and the obstacle area 97. The first area 94 is an area that includes the obstacle area 97 and that expands toward the outside of the obstacle area 97 and is an area directed to the opposite side of the holding object 80 from the outer edge facing the holding object 80 in the obstacle area 97, as described above. The controller 12 calculates, for example, a straight line that passes through a center C92 of the object area 92 and that is overlapped with the obstacle area 97. The controller 12 rotates the straight line with respect to the center C92 to generates the locus through which the line segment of the straight line outside the obstacle area 97 passes as the first area 94. Alternatively, the controller 12 draws two straight lines SL each of which passes through the center C92 of the object area 92 and each of which intersects with the outer edge of the obstacle area 97 at one point. As illustrated in FIG. 7 and FIG. 9, the controller 12 generates an area surrounded by the two straight lines SL, the outer edge of the second area 96, and the outer edge at the object area 92 side of the obstacle area 97 as the first area 94.

The controller 12 generates the approach area 91 by excluding the object area 92 and the first area 94 from the second area 96. As illustrated in FIG. 10, the controller 12 may exclude at least one selected from the group consisting of an area 92ex resulting from expansion of the object area 92 and an area 94ex resulting from expansion of the first area 94 from the second area 96 to generate the approach area 91. The object area 92 and the first area 94 to be excluded from the second area 96 may be expanded to sizes half or more of the width of the holder in the width direction of the holder and to sizes half or more of the thickness of the holder in the thickness direction of the holder. In the following description, the object area 92 or the expanded area 92ex may be referred to as an "object area 92 or 92ex". The first area 94 or the expanded 94ex may be referred to as a "first area 94 or 94ex".

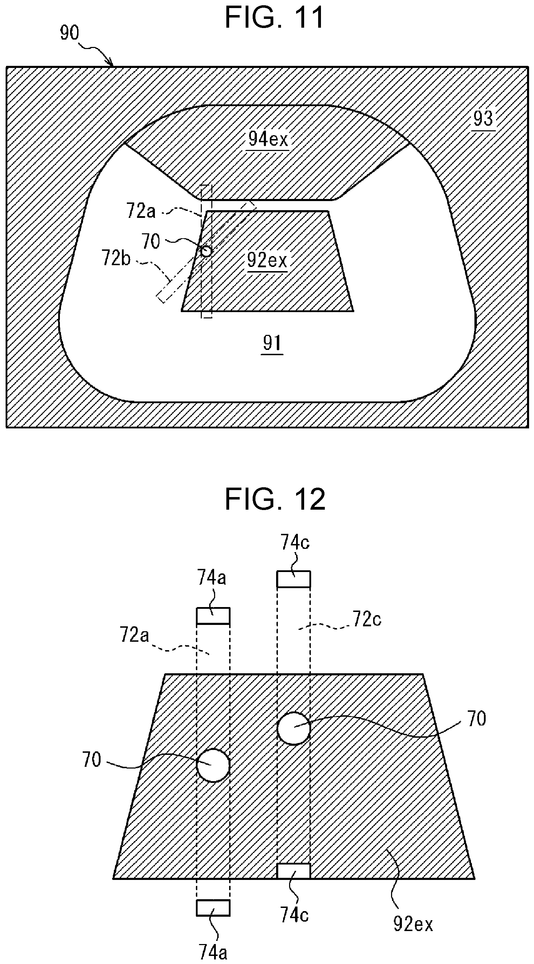

The controller 12 estimates the opening width at an arbitrary point within the range of the window 22 in the mask image 20. The arbitrary point is a reference position of the end effector 2B when the end effector 2B is caused to hold the holding object 80. The arbitrary point selected within the range of the window 22 corresponds to an approach position 70 included in the object area 92 or 92ex in the approach map 90, as illustrated in FIG. 11. In other words, the controller 12 sets an arbitrary point in the range of the window 22 in the mask image 20 as the approach position 70. The controller 12 projects the end effector model 30 with the center of the end effector model 30 being matched with the approach position 70. The projected end effector model 30 is represented as projection models 72a and 72b in FIG. 11. The projection model 72a corresponds to a model resulting from rotation of the end effector model 30 along the short-side direction of the object area 92 or 92ex. The projection model 72b corresponds to a model resulting from clockwise rotation of the end effector model 30 by 45 degrees from the short-side direction of the object area 92 or 92ex.

The controller 12 determines that the end effector model 30 is not capable of being projected when the holder positions 32 included in the end effector model 30 are overlapped with the object area 92 or 92ex. As illustrated in FIG. 12, in the case of the projection model 72a, projection positions 74a of the holders, included in the projection model 72a, are not overlapped with the object area 92 or 92ex. Accordingly, the controller 12 is capable of projecting the projection model 72a on the approach map 90. In contrast, in the case of a projection model 72c, a projection position 74c of the holder, included in the projection model 72c, is overlapped with the object area 92 or 92ex. Accordingly, the controller 12 is not capable of proj ecting the projection model 72c on the approach map 90. Not projecting the end effector model 30 when the holder positions 32 are overlapped with the object area 92 or 92ex enables the approach position 70 at which the end effector 2B comes into collision with the holding object 80 while the end effector 2B is approaching the holding object 80 to be determined. The determination of the approach position 70 at which the end effector 2B comes into collision with the holding object 80 enables the position to be excluded as the arbitrary point selected for estimation to be determined.

The controller 12 determines that the end effector model 30 is not being projected if it can be determined that the spacing between the object area 92 and the first area 94 is shorter than the thickness of the holder. It can be determined that the spacing is shorter than the thickness of the holder if the spacing is shorter than half of the thickness of the holder in the approach map 90 in which either of the object area 92 and the first area 94 is expanded. Alternatively, it can be determined that the spacing is shorter than the thickness of the holder if the expanded area 92ex is at least only slightly overlapped with the expanded area 94ex in the approach map 90 in which both the object area 92 and the first area 94 are expanded. With the above configuration, when part of the end effector 2B is displaced toward the holding object 80 to cause the end effector 2B to hold the holding object 80, the approach position 70 at which the end effector 2B comes into collision with the obstacle is determined. The determination of the approach position 70 at which the end effector 2B comes into collision with the obstacle enables the position to be excluded as the arbitrary point selected for estimation of the opening width to be determined.

In a configuration in which the holder positions 32 are not identified in the end effector model 30, the controller 12 determines whether the end effector model 30 is capable of being projected based on the feature points of the holders associated with the end effector model 30.

The position of the end effector 2B, which corresponds to the position and the rotation angle of the end effector model 30 that are capable of being projected on the approach map 90, may be a position adapted to the approach map 90. The controller 12 may estimate the opening width at each position adapted to the approach map 90.

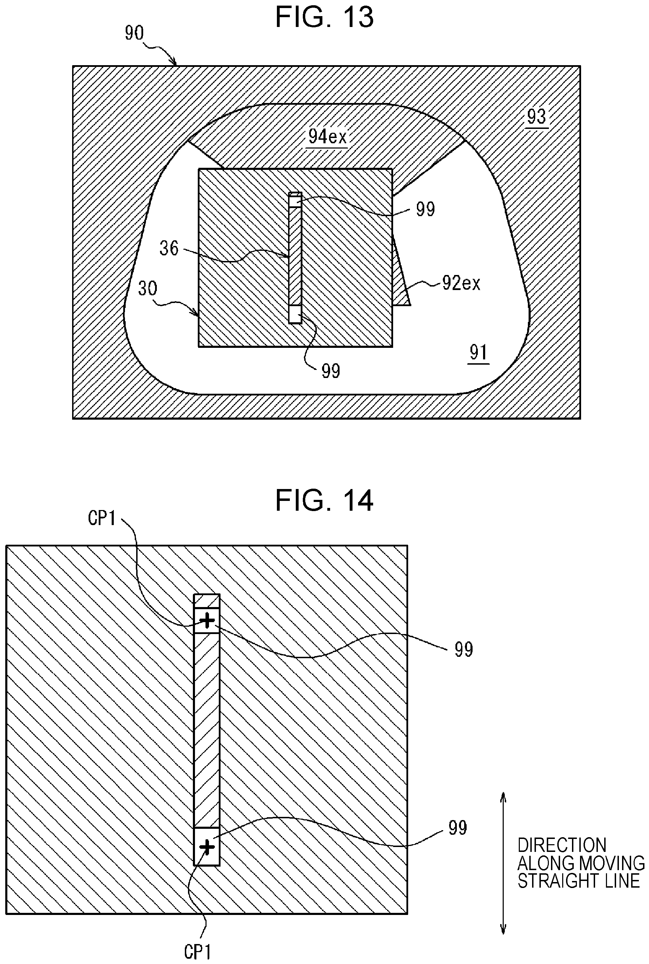

The controller 12 may estimate the opening width based on the approach area 91 on the approach map 90 and the area in which the end effector 2B can exist in the end effector model 30 if the end effector model 30 has been projected on the approach map 90. As illustrated in FIG. 13, the controller 12 estimates a possible existence area 99 for each holder to estimate the opening width. The possible existence area 99 is an area in which the approach area 91 is overlapped with the operation range 36 of the holder in the overlapping of the end effector model 30 on the approach map 90.

The controller 12 may estimate an arbitrary point in the possible existence area 99 of the holder as the position of the holder, which corresponds to the opening width. The controller 12 estimates the position of each holder, that is, the position of the holder in each possible existence area 99 corresponding to each holder.

The controller 12 may estimate the position of the holder corresponding to the opening width using, for example, the following method. As illustrated in FIG. 14, the controller 12 calculates a first center position CP1, which is the center position of the possible existence area 99 corresponding to each holder. The controller 12 determines whether the holder interferes with the holding object 80 and an object other than the holding object 80 when the holder is displaced along a certain direction of each holder from the first center position CP1. The controller 12 displaces the holder until the holder reaches an end of the corresponding possible existence area 99 from the first center position CP1. Specifically, the controller 12 estimates an arbitrary position that does not interfere with the holding object 80 and an object other than the holding object 80, in the area through which the holder passes until the holder reaches the end of the possible existence area 99, as the position of the holder corresponding to the opening width in the possible existence area 99. In other words, the controller 12 estimates an arbitrary position in an area in which the area through which the holder passes until the holder reaches the end of the possible existence area 99 is overlapped with the approach area 91, as the position of the holder corresponding to the opening width in the possible existence area 99. More specifically, the controller 12 displaces the first center position CP1 along a certain direction. In addition, the controller 12 estimates an arbitrary point that is displaced from the first center position CP1 and that can be positioned in the approach area 91 as the position of the holder.

In a configuration in which the end effector 2B has the multiple holders and the multiple holders are opened and closed at the same width, the position of each holder corresponding to the opening width is estimated to a position where all the holders have the same opening width.

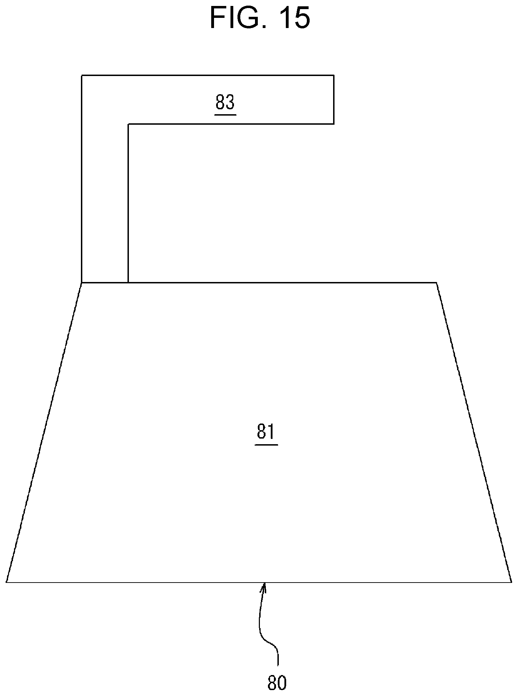

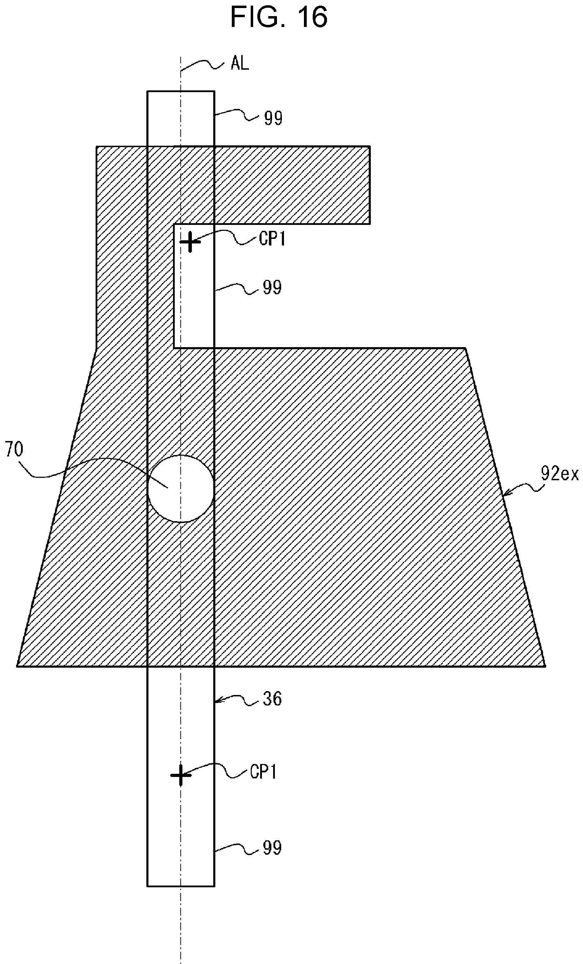

As illustrated in FIG. 15, the holding object 80 may be an object having a main body 81 and a hook-shaped member 83 on a cross section at an arbitrary height. In the case of the holding object 80 having such a shape, as illustrated in FIG. 16, the first center position CP1 of the possible existence area 99 corresponding to one holder may be deviated from the center in the width direction of the holder depending on the approach position 70. In other words, the first center position CP1 may be deviated from a moving straight line AL that passes through the center position (the approach position 70) of the area in which the end effector 2B can exist and that is parallel to the opening-closing direction of the holder. If the first center position CP1 is deviated from the moving straight line AL as in the above example, the controller 12 may assume an intersecting point between a perpendicular from the first center position CP1 to the moving straight line AL and the moving straight line AL as the first center position CP1 to estimate the position of the holder corresponding to the opening width in the above manner.

The controller 12 may first displace the holder from the first center position CP1 to the area in which the end effector 2B can exist in the end effector model 30, that is, the center position of the operation range 36 of the holder. If the approach area 91 does not exist upon displacement of the holder toward the center position of the operation range 36 of the holder, the controller 12 may search for the approach area 91 outside the first center position CP1 in the possible existence area 99.

The controller 12 may select, for example, the position where a point first reaches the approach area 91 while displacing the point along a certain direction from the first center position CP1 as an arbitrary position to estimate the selected arbitrary position as the position of the holder. For example, as illustrated in FIG. 14, when the possible existence area 99 corresponding to a single arbitrary holder has the same width as that of the holder across the entire area in the direction along the moving straight line AL, the first center position CP1 may be estimated as the position of the holder.

The controller 12 moves the approach position 70 so as to perform scanning within the range of the window 22 in the mask image 20 and rotates the end effector model 30 at each position to project the end effector model 30 on the approach map 90. The controller 12 extracts a combination of the approach position 70, the rotation angle of the end effector model 30, and the opening width of the end effector 2B, which enables the projection of the end effector model 30 on the approach map 90.

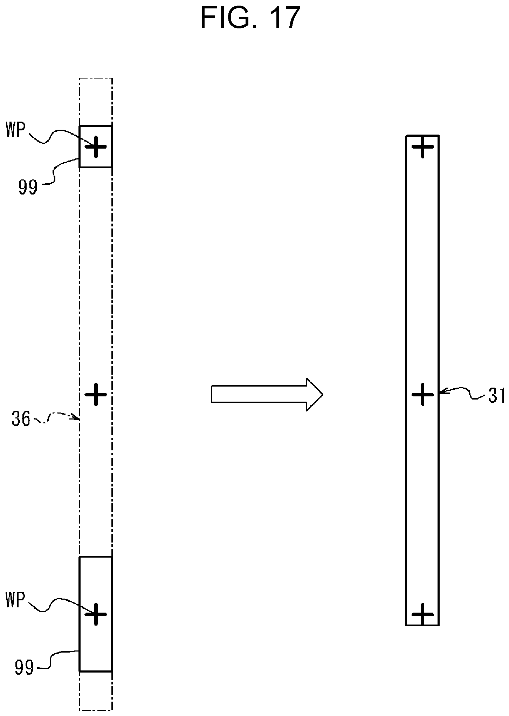

The controller 12 may create an opening width model based on the estimated opening width. The opening width model identifies an area in which the end effector 2B can exist within the range of the opening width estimated as the positions of the holders. As illustrated in FIG. 17, an opening width model 31 is created by drawing an area that has the length from the center of the operation range 36 of the holders to positions WP of the respective holders corresponding to the opening width and that has the width of the holders.

The controller 12 may estimate the holding position where the end effector 2B is in contact with the holding object 80 based on the opening width model 31 and a rule map described below. The controller 12 may create the rule map for estimation of the holding position. The rule map may be created at each height at which the holding object 80 is held. The rule map may identify a rule by a display mode of a two-dimensional image. The controller 12 may create the rule map based on at least one selected from the group consisting of the holding target image and the depth data. The controller 12 may acquire the rule map from an external device via the interface 14.

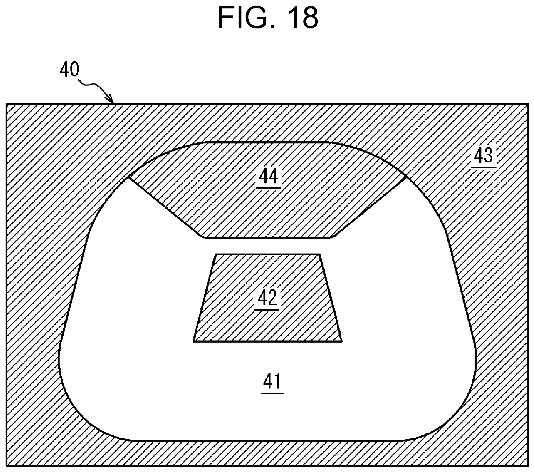

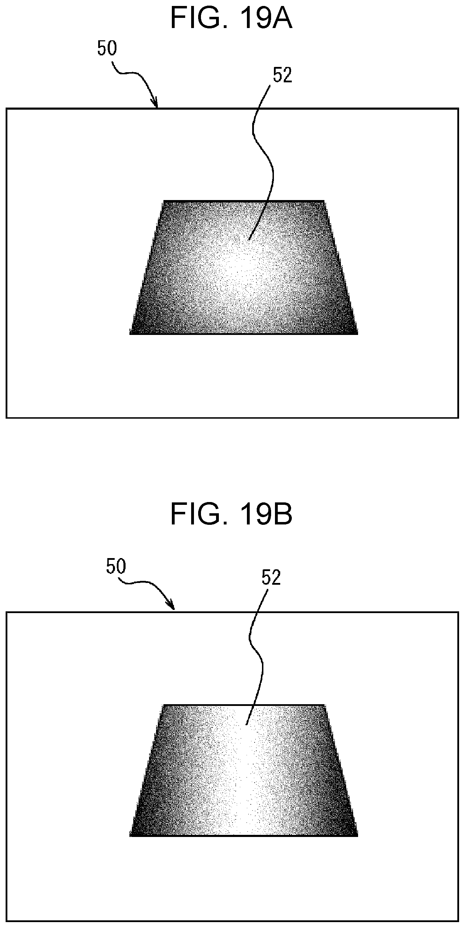

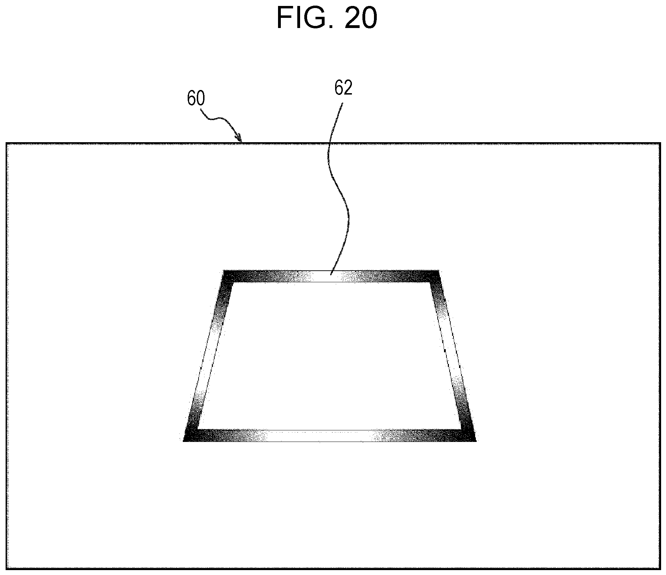

The rule map may include a map which the end effector 2B uses for holding, that is, which defines the position of the holding object 80 to be in contact with the end effector 2B, that is, the holding position. The rule map may include a map created based on the height at which the holding object 80 is held. The rule map may be classified into, for example, a surrounding environment map 40 (refer to FIG. 18), an object map 50 (refer to FIG. 19A and FIG. 19B), a contact map 60 (refer to FIG. 20), and so on. The controller 12 may acquire the rule map based on at least one selected from the group consisting of shape data about the holding object 80 and the depth data associated with the holding target image.

The surrounding environment map 40 may identify an approach area 41, an object area 42, a non-approach area 43, and a first area 44, as illustrated in FIG. 18. The surrounding environment map 40 may be the same as the approach map 90 that is not subjected to the expansion process. Accordingly, the approach area 41, the object area 42, the non-approach area 43, and the first area 44 in the surrounding environment map 40 may be the same as the approach area 91, the object area 92, the non-approach area 93, and the first area 94, respectively, in the approach map 90. The surrounding environment map 40 may be created using the same method as that of the approach map 90.

The controller 12 may perform airbrushing to obscure the boundary to the generated surrounding environment map 40. Each area included in the surrounding environment map 40 generated in the above manner can be discriminated as a numerical value at each coordinate on the map. For example, the controller 12 may set one representing that the point identified by a coordinate included in the approach area 41 is included in the operation range of the end effector 2B as the numerical value at the coordinate. In contrast, the controller 12 may set 0 (zero) representing that the point identified by a coordinate included in the object area 42, the non-approach area 43, or the first area 44 is not included in the operation range of the end effector 2B as the numerical value at the coordinate. The controller 12 sets a value that is greater than zero and that is smaller than one, for example, a value of 0.5 as the numerical value at the coordinate identifying a point within a certain range from the boundary between the area for which one is set and the area for which zero is set. The controller 12 performs the process to obscure the boundary between the areas in the above manner as the airbrushing.

The surrounding environment map 40 generated in the above process can be discriminated as colors at the respective coordinates on the map. The controller 12 may represent, for example, a point included in the approach area 41 in white and a point included in any of the other areas in black. The controller 12 may represent the colors of the points within a certain range from the boundary between the area represented in white and the area represented in black in grayscale. The controller 12 may perform the process to obscure the boundary between the areas in the above manner as the airbrushing. Representation of the color of each area in black, white, or gray corresponds to representation of the numerical value set for each area as a luminance value.

The airbrushing performed by the controller 12 can reduce the possibility of unexpected collision of the end effector 2B with the object due to an error of the operation range of the end effector 2B or due to an error of the outline of the holding object 80 or the obstacle. In other words, the controller 12 is capable of estimating the position of the end effector 2B with respect to the holding object 80 through the airbrushing in consideration of various margins. The airbrushing may be performed for the periphery of each area included in the generated surrounding environment map 40. Each area is extended through the airbrushing.

The object map 50 represents information that is referred to for determining which position the holding object 80 is held at, for example, when an operator holds the holding object 80. The object map 50 represents, for example, information about the shape, the material, the density distribution, or the like about the holding object 80.

For example, the presence of the holding object 80 is assumed, which has the more appropriate holding position as the distance to the center of the holding object 80 is decreased. The object map 50 involved in the holding object 80 assumed in the above manner may be represented in grayscale on a cross section 52 along a plane at the height at which the holding object 80 is held, as illustrated in FIG. 19A. In the grayscale, a point closer to the center of the holding object 80 is represented in a color closer to white, which indicates the holding position more appropriate for the rule, and a point farther from the center of the holding object 80 is represented in a color closer to black, which indicates the holding position that is not more appropriate for the rule. In addition, the object map 50 may be represented in grayscale identifying a rule arbitrarily set by the user as the rule for estimating the position where the holding object 80 is held, as illustrated in FIG. 19B. In the creation of the object map 50 illustrated in FIG. 19B, which indicates the more appropriate gripping position as the distance to the center of the holding object 80 is decreased, a point closer to the center along the horizontal direction of the cross section 52 of the holding object 80 is represented in a color closer to white, which indicates the holding position that is more appropriate, and a point farther from the center along the horizontal direction of the cross section 52 of the holding object 80 is represented in a color closer to black, which indicates the holding position that is not more appropriate. The points on the object map 50 in FIG. 19B are represented in the same colors along the height direction of the cross section 52.

Referring to FIG. 19A and FIG. 19B, the black solid line surrounding the cross section 52 on the object map 50 is simply a line representing the outline of the cross section 52 and represents no rule. The coordinates on which the black solid line is drawn do not represent the holding positions that are not appropriate.

When the position where the holding object 80 is held is assumed and the appropriateness of the holding at the assumed position is evaluated, the object map 50 may be configured so that the aptitude value representing the evaluation of the appropriateness is increased as the holding position is closer to the area represented in a color closer to white. In addition, the object map 50 may be represented by associating a numerical value to the color of each coordinate, like the surrounding environment map 40. For example, the controller 12 may set one for the coordinate represented in white and may set zero for the coordinate represented in black.

How the object map 50 is created is not limited to the above examples. The controller 12 may create the object map 50 in which the color or the numerical value is set for each coordinate so as to identify various rules. For example, the controller 12 may create the object map 50 in which the color or the numerical value is set for each coordinate depending on the distance from the centroid of the holding object 80. For example, the controller 12 may create the object map 50 in which the color or the numerical value is set for each coordinate so as to identify the position that is avoided as the holding position or the position that is not used as the holding position.

The controller 12 may create one object map 50 that identifies multiple rules by combining the object maps 50 each identifying one rule. When the multiple object maps 50 are combined, the controller 12 may set a weighting coefficient for each object map 50 for combination. For example, when the centroid position of the holding object 80 is important, the controller 12 may set a higher weighting coefficient for the object map 50 identifying the centroid position.

The object map 50 may be defined based on the features of the holding object 80. The object map 50 may be defined based on any of the shape, the material, the texture, the weight, or the friction coefficient of the holding object 80. The object map 50 may be based on a rule that is arbitrarily defined by the user for the holding position of the holding object 80. For example, among the portions of the holding object 80, the portions that are not set as the holding positions for various reasons, such as the portion that is likely to be damaged or deformed due to contact, the portion to which grease or the like is attached, and the slippery portion that is not appropriate for holding, can be defined for the object map 50 as the rules. Similarly, the portion that is not likely to be damaged or deformed, the portion to which grease or the like is not attached, the portion that is not slippery, and the portion that is desirably set as the holding position by rule of thumb (the portion that are easily held) can be defined for the object map 50 as the rules. Representing the object map 50 as a two-dimensional image enables the user to easily understand which rule is defined as the holding position of the holding object 80. The object map 50 may be created for each kind of the holding object 80.

The contact map 60 represents a rule that is defined based on the relationship between the fingers of the end effector 2B and the state of the surface of the holding object 80. The contact map 60 represents information that is referred to for determining which position the holding object 80 is held at, for example, when the operator holds the holding object 80, like the object map 50. The contact map 60 is defined based on the shape of the portion where the end effector 2B is in contact with the holding object 80 and the shape of the holding object 80. The contact map 60 represents the appropriateness as the position where the end effector 2B is in contact with the holding object 80. For example, the portion that is used as the holding position and the portion that is not used as the holding position can be defined on the contact map 60 based on the relationship between the shape or the material of the portion where the end effector 2B is in contact with the holding object 80 and the shape or the material of the holding position of the holding object 80. More specifically, the portion having a small contact area between the end effector 2B and the holding object 80, the portion in which the friction coefficient between the end effector 2B and the holding object 80 is lower than a predetermined value, or the portion that is difficult to hold for the used end effector 2B by rule of thumb can be defined for the contact map 60 as the rule representing the portion that is not used as the holding position. Similarly, the portion having a large contact area between the end effector 2B and the holding object 80, the portion in which the friction coefficient between the end effector 2B and the holding object 80 is higher than the predetermined value, or the portion that is easy to hold for the used end effector 2B by rule of thumb can be defined for the contact map 60 as the rule representing the portion that is used as the holding position.

The contact map 60 represents, for example, the contact area between the surface of the holding object 80 and the fingers of the end effector 2B, the frictional force exerted between the surface of the holding object 80 and the fingers of the end effector 2B, or the like when the holding object 80 is held by the end effector 2B. If the surface of the holding object 80 has irregularities, the contact area can be greatly varied in response to slight shift of the positions of the fingers of the end effector 2B.

The contact map 60 may be represented in grayscale on an outer periphery 62 of a cross section along a plane at the height at which the holding object 80 is held, as illustrated in FIG. 20. In the grayscale, a point closer to the center of each side is represented in a color closer to white, which indicates the more appropriate holding position, and a point that is farther from the center of each side and that is closer to each corner is represented in a color closer to black, which indicates the holding position that is not more appropriate. The contact map 60 illustrated in FIG. 20 represents the contact area between the surface of the holding object 80 and the fingers of the end effector 2B, which is increased when the position close to the center of each side is held and which is decreased when the position close to each corner is held.

Referring to FIG. 20, the black solid line surrounding the outer periphery 62 on the contact map 60 is simply a line representing the outline of the outer periphery 62. The coordinates on which the black solid line is drawn do not represent the holding positions that are not appropriate.

The controller 12 may create one contact map 60 that identifies multiple rules by combining the contact maps 60 each identifying one rule. When the multiple contact maps 60 are combined, the controller 12 may set the weighting coefficient for each contact map 60 for combination. For example, when the contact area between the surface of the holding object 80 and the fingers of the end effector 2B is important, the controller 12 may set a higher weighting coefficient for the contact map 60 identifying the contact area.

The controller 12 estimates the position where the holding object 80 is held based on the created rule map. Specifically, the controller 12 projects the opening width model 31 on the rule map as a temporary holding position and calculates a degree of coincidence at the projected position to evaluate the appropriateness of the holding of the holding object 80 at the temporary holding position.

The controller 12 calculates the degree of coincidence in the surrounding environment map 40 in each combination of the approach position 70 and the rotation angle of the end effector 2B, which are extracted with the opening width of the end effector 2B. Specifically, the controller 12 projects the opening width model 31 on the surrounding environment map 40 at the approach position 70 and the rotation angle that are extracted. The controller 12 calculates the average value of the numerical values or the luminance values of the colors, which are set for the respective coordinates in a range in which the approach area 41 on the surrounding environment map 40 is overlapped with the opening width model 31, as the degree of coincidence.

The position of the end effector 2B, which corresponds to the position and the rotation angle of the opening width model 31 that are capable of being projected on the surrounding environment map 40, may be a position adapted to the surrounding environment map 40. The controller 12 may estimate the holding position from the positions adopted to the surrounding environment map 40.

The controller 12 calculates the degree of coincidence in the object map 50 in each combination of the approach position 70 and the rotation angle of the end effector 2B, which are extracted with the opening width of the end effector 2B. Specifically, the controller 12 projects the opening width model 31 on the object map 50 at the approach position 70 and the rotation angle that are extracted. The controller 12 calculates the average value of the numerical values or the luminance values of the colors, which are set for the respective coordinates in a range in which the cross section 52 of the holding object 80 on the object map 50 is overlapped with the opening width model 31, as the degree of coincidence.

The object map 50 represents the appropriateness as the position where the holding object 80 is held. The position of the end effector 2B, which corresponds to the position and the rotation angle of the opening width model 31 to be projected on the object map 50, may be a position adapted to the object map 50. The controller 12 may estimate the holding position from the positions adopted to the object map 50.

The controller 12 calculates the degree of coincidence in the contact map 60 in each combination of the approach position 70 and the rotation angle of the end effector 2B, which are extracted with the opening width of the end effector 2B. Specifically, the controller 12 projects the opening width model 31 on the contact map 60 at the approach position 70 and the rotation angle that are extracted. The controller 12 calculates the average value of the numerical values or the luminance values of the colors, which are set for the respective coordinates in a range in which the outer periphery 62 on the contact map 60 is overlapped with the opening width model 31, as the degree of coincidence.

The contact map 60 represents the appropriateness of the portion where the end effector 2B is in contact with the holding object 80 as the position where the end effector 2B is in contact with the holding object 80. The controller 12 may estimate the holding position from the multiple positions of the end effector 2B, which correspond to the positions and the rotation angles of the multiple opening width models 31 to be projected on the contact map 60.

The controller 12 may calculate an angle at which each holder position 32 of the opening width model 31 is incident on the outer periphery 62 along the direction of the stroke range 34. In other words, the controller 12 may calculate the angle of the intersection at each of the two intersecting points between the line along the direction of the stroke range 34 of the opening width model 31 and the outer periphery 62. In the present embodiment, the controller 12 calculates the angle of incidence when the holder position 32 is incident on the outer periphery 62 at right angle as zero degrees. The controller 12 may reflect the calculated angle in the value of the degree of coincidence on the contact map 60. The controller 12 may calculate the value of the degree of coincidence as a higher value as the angle comes closer to zero. For example, the controller 12 may calculate the product of the average value of the numerical values or the luminance values of the colors, which are set for the respective coordinates in a range in which the outer periphery 62 on the contact map 60 is overlapped with the projected opening width model 31, and the cosine value of the calculated angle as the degree of coincidence.

If the outer periphery 62 has irregularities, the controller 12 may create a model by flattening the outer periphery 62 based on the thickness, the width, or the length of the holder of the end effector 2B to calculate the angle at which the holder position 32 is incident on the model that results from the flattening.

The controller 12 totals the degrees of coincidence calculated for the respective rule maps for each combination of the approach position 70 and the rotation angle of the opening width model 31 to calculate a total degree of coincidence. The controller 12 may weight the degrees of coincidence calculated for the respective rule maps for the totaling. The controller 12 uses the same weighting value for all the combinations when the degrees of coincidence calculated for the respective rule maps are weighted. The weighting coefficient applied to the degree of coincidence calculated for each rule map is also referred to as a map coefficient. The map coefficient may be defined for each map.

As described above, the controller 12 calculates the total degree of coincidence for each holding position based on the opening width model 31 and the rule map. The total degree of coincidence corresponds to an appropriateness value representing the appropriateness of each holding position. The rule map represents the appropriateness as the position where the holding object 80 is held using the numerical value, the luminance value of the color, or the like allocated to each position (each coordinate) on the rule map. The controller 12 is capable of calculating the appropriateness value by computing the value allocated to each position when the end effector model 30 is superimposed on the rule map.

The controller 12 compares the total degrees of coincidence calculated for the respective combinations of the approach position 70 and the rotation angle of the end effector model 30 to select a combination having a high total degree of coincidence. The controller 12 estimates the positions where the fingers of the end effector 2B are incident on the holding object 80 when the fingers of the end effector 2B move along the stroke direction, as the positions where the holding object 80 is held. The positions where the fingers of the end effector 2B are incident on the holding object 80 are determined based on the approach position 70 and the rotation angle of the end effector model 30 in the selected combination. In other words, the controller 12 estimates the holding positions based on the end effector model 30 and the rule map. In addition, the controller 12 may estimate the holding positions based on the appropriateness value. The controller 12 supplies the estimated holding positions to the robot control apparatus 110 via the interface 14.

### (Example of process in holding parameter estimation method)

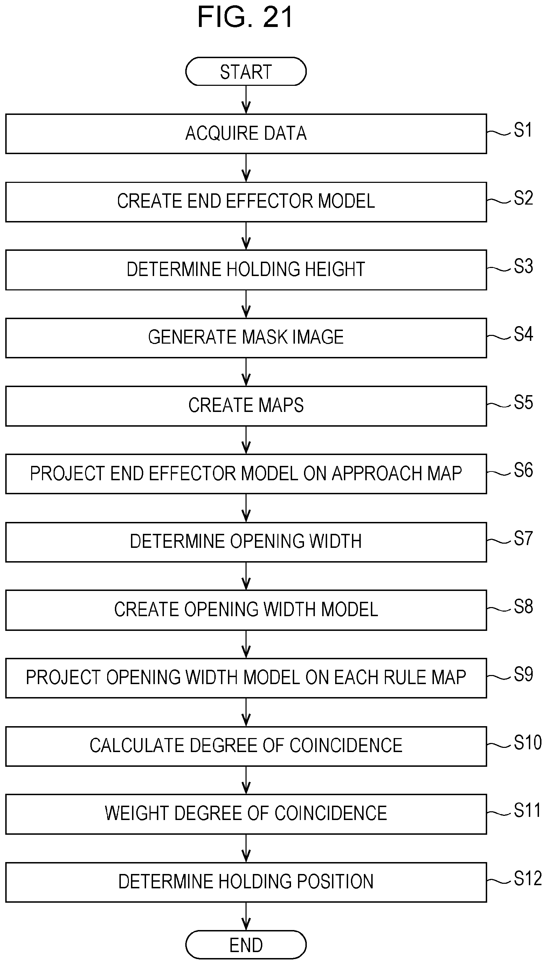

The controller 12 in the holding parameter estimation device 10 may perform a holding parameter estimation method including a process in a flowchart illustrated in FIG. 21. The holding parameter estimation method may be realized as a holding position estimation program executed by the processor composing the controller 12 in the holding parameter estimation device 10. The holding parameter estimation program may be stored in a non-temporary computer readable medium.

The controller 12 acquires data including the information concerning the end effector 2B, the holding target image of the holding object 80, and the depth data about the holding object 80 (Step S1). The controller 12 creates the end effector model 30 (Step S2). The controller 12 estimates the height at which the holding object 80 is held (Step S3). The controller 12 generates the mask image 20 (Step S4).

The controller 12 creates the rule maps, such as the approach map 90, the surrounding environment map 40, the object map 50, and the contact map 60 (Step S5). The controller 12 projects the end effector model 30 on the approach map 90 (Step S6). The controller 12 estimates the opening width of the end effector 2B through the projection of the end effector model 30 on the approach map 90 (Step S7). The controller 12 creates the opening width model 31 based on the estimated opening width (Step S8). The controller 12 projects the opening width model 31 on each rule map (Step S9). The controller 12 calculates the degree of coincidence between each rule map and the opening width model 31 projected on each rule map (Step S10). The controller 12 weights the degree of coincidence calculated for each rule map to calculate the total degree of coincidence (Step S11). The controller 12 selects the projection position of the opening width model 31 at the high total degree of coincidence to estimate the position where the holder of the end effector 2B is incident on the holding object 80 at the selected position as the holding position (Step S12). After Step S12, the controller 12 terminates the process in the flowchart in FIG. 21.

The controller 12 may perform Step S4 to generate the mask image 20 before Step S2 or S3.

### (Review)

As described above, according to the present embodiment, with the holding parameter estimation device 10, the opening width when part of the end effector 2B is displaced to hold the holding object 80 is estimated based on the end effector model 30, the holding target image, and the depth data. If the opening width of the end effector 2B when part of the end effector 2B is displaced toward the holding object 80 for holding is close to the width of the holding object 80, the end effector 2B may collide with the holding object during displacement. In contrast, if the opening width is too wide, it takes a long time to hold the holding object 80 after part of the end effector 2B is displaced toward the holding object 80. In addition, if the opening width is too wide, the end effector 2B may collide with an obstacle around the holding object 80 in an operation to close the end effector 2B after the displacement. Against the above events, since the holding parameter estimation device 10 having the above configuration estimates the opening width in the displacement, the holding parameter estimation device 10 can estimate an appropriate state when the end effector 2B is caused to come close to the holding object 80. Accordingly, the holding parameter estimation device 10 can provide parameters to operate the robot 2 so that the appropriate opening width is achieved.

In the holding parameter estimation device 10 of the present embodiment, the approach area 91 on the approach map 90 is an area achieved by excluding the areas resulting from expansion of the area in which the holding object 80 exists and the first area 94 to sizes half or more of the width of the holder in the width direction of the holder of the end effector 2B and to sizes half or more of the thickness of the holder in the thickness direction of the holder. With such a configuration, the holding parameter estimation device 10 can estimate the opening width in the area in which the possibility of interference with the holding object 80 and an object other than the holding object 80 is low.

The holding parameter estimation device 10 of the present embodiment calculates the first center position CP1, which is the center position of the possible existence area 99 of each holder of the end effector 2B, and estimates an arbitrary position that does not interfere with the holding object 80 and an object other than the holding object 80, in the area which each holder passes through until the holder reaches the end of the possible existence area 99 when the holder is displaced toward the holding object 80 from the first center position CP1 along a certain direction of the holder, as the position of the holder corresponding to the opening width in the possible existence area 99. With such a configuration, the holding parameter estimation device 10 can determine the presence of the interference only at one point without determining the presence of the interference in the entire area of the holder at the arbitrary position. Accordingly, the holding parameter estimation device 10 can rapidly estimate the opening width.

In the holding parameter estimation device 10 of the present embodiment, if the first center position CP1 is deviated from the moving straight line AL, the controller 12 may assume an intersecting point between a perpendicular from the first center position CP1 to the moving straight line AL and the moving straight line AL as the first center position CP1 to estimate the position of the holder corresponding to the opening width. With such a configuration, the holding parameter estimation device 10 can estimate the position of the holder corresponding to the opening width on the moving straight line AL even if part of the holding object 80 or the like is positioned between the surface of the holding object 80 at the innermost side in the range where the holder is capable of moving and the maximum opening width of the holder.

With the holding parameter estimation device 10 of the present embodiment, the holding position when the holding object 80 is held with the end effector 2B of the robot 2 is estimated based on the rule map. The estimation of the holding position based on the rule map enables the experiment or the like of the operator to be reflected in the rule map. For example, when the operator holds the various holding objects 80, the operator considers which position each holding object 80 is held at. The operator determines the holding position in consideration of, for example, the center of mass of the holding object 80, the obstacle existing around the holding object 80, the wide holding position of the holding object 80, and the like. In other words, according to the present embodiment, with the holding parameter estimation device 10, the considerations of the operator are reflected in the rule map, the degree of coincidence in each rule map is calculated, and the gripping position is estimated based on the total degree of coincidence calculated through weighting of the degrees of coincidence. As a result, the robot 2 is capable of holding the holding object 80 at the holding position intended by the operator. In other words, the holding position of the object can be easily estimated to the position intended by a person.

In addition, the operator is capable of using the rule map in which the holding position is ruled. As a result, it is not necessary for the operator to perform learning. Furthermore, addition of a rule map when a new rule occurs enables the operator to easily respond to change in environment. For example, the work including the holding of the holding object 80 can include various components corresponding to the operator, the environment of the site of work, or the like. Accordingly, it is necessary to estimate the holding position of the holding object 80 based on the respective components to hold the holding object 80. Creation of the rule map in which the various components are reflected and addition of the created rule map to the calculation target of the degree of coincidence facilitate response to special rules and so on of each operator or in each site of work.

### (Other embodiments)

Other embodiments will now be described.

### <Use of estimation result based on another method>

The holding parameter estimation device 10 may acquire the holding position of the holding object 80, which is estimated based on another method. The holding parameter estimation device 10 may perform the holding parameter estimation method of the present embodiment to the acquired holding position to estimate the opening width at each holding position that is acquired.

Specifically, the controller 12 in the holding parameter estimation device 10 acquires the holding position of the holding object 80 estimated based on another method via the interface 14. The controller 12 calculates the combination of the approach position 70 and the rotation angle of the end effector model 30, which corresponds to the acquired holding position. The controller 12 projects the end effector model 30 on the approach map 90 with the combination corresponding to the acquired holding position to estimate the opening width. In addition, the controller 12 may create the opening width model 31 based on the estimated opening width. The controller 12 may project the opening width model 31 on each rule map to calculate the degree of coincidence on each rule map. The controller 12 may weight the degree of coincidence on each rule map and total the degrees of coincidence to calculate the total degree of coincidence. The controller 12 may select the opening width and the holding position, which correspond to the combination having a high total degree of coincidence, to supply the opening width and the holding position that are selected to the robot control apparatus 110.

The holding parameter estimation device 10 may evaluate the appropriateness of the holding position acquired through the calculation of the total degree of coincidence at the acquired holding position. The controller 12 evaluates whether the acquired holding position is appropriate based on the calculated total degree of coincidence. The controller 12 may determine that the acquired holding position is appropriate, for example, if the calculated total degree of coincidence is higher than or equal to a predetermined value.

The holding parameter estimation device 10 may acquire the center position of the end effector 2B and the rotation angle, which are estimated based on another method. The holding parameter estimation device 10 is capable of performing the holding parameter estimation method of the present embodiment by using the acquired center position of the end effector 2B as the approach position 70 and calculating the combination of the approach position 70 and the rotation angle.

The holding parameter estimation device 10 is capable of reducing the number of the combinations of the approach position 70 and the rotation angle, for which the degrees of coincidence are calculated, by acquiring the holding position of the holding object 80, which is estimated based on another method. As a result, the calculation load can be reduced.

### <Adjustment of weighting by learning>

The holding parameter estimation device 10 weights the degrees of coincidence calculated for the respective rule maps and totals the degrees of coincidence to calculate the total degree of coincidence. The holding parameter estimation device 10 may update the weighting coefficient through learning based on information concerning annotation for the estimated holding position. The holding parameter estimation device 10 is capable of improving the estimation accuracy of the holding position by updating the weighting coefficient.

Specifically, the controller 12 in the holding parameter estimation device 10 may inform the user of the estimated holding position via the interface 14. The controller 12 accepts an input to modify the holding position from the user via the interface 14 as the annotation for the estimated holding position. The controller 12 may supply the modified holding position to the robot control apparatus 110 based on the information concerning the modification from the user. The controller 12 may update the weighting coefficient through learning based on the information concerning the modification from the user to estimate the holding position again.

The controller 12 may estimate multiple holding position candidates to notify the user of the estimated holding position candidates via the interface 14. The controller 12 may estimate the holding positions having the total degrees of coincidence of a predetermined value or higher as the candidates. The controller 12 accepts an input to select the holding position from the holding position candidates from the user via the interface 14 as the annotation for the estimated holding position. The controller 12 may supply the holding position selected by the user to the robot control apparatus 110. The controller 12 may update the weighting coefficient through learning based on the information selected by the user.

The controller 12 may extract the holding position having the total degree of coincidence of a predetermined value or higher as the candidate position where the holding object 80 is capable of being held to notify the user of the candidate position. The controller 12 accepts an input to modify the candidate position or an input to select the candidate position from the user via the interface 14 as the annotation for the candidate position. The controller 12 evaluates the appropriateness of each candidate position based on the input to modify or select the candidate position. The controller 12 may update the weighting coefficient so that the candidate position evaluated as the holding position having a high appropriateness based on the input from the user has the total degree of coincidence of a high value. The controller 12 may supply the selected candidate position to the robot control apparatus 110 as the holding position. The controller 12 may supply the modified candidate position to the robot control apparatus 110 as the holding position.

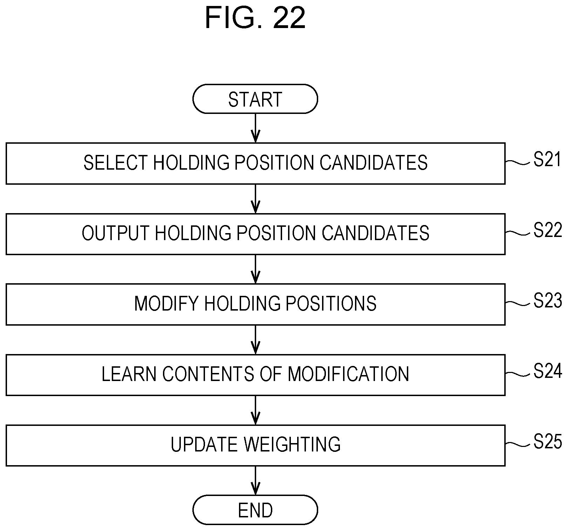

The controller 12 in the holding parameter estimation device 10 may perform a process in a flowchart illustrated in FIG. 22. The controller 12 selects the holding position candidates, for example, by performing the process in the flowchart in FIG. 22 (Step S21). The controller 12 outputs the holding position candidates to the interface 14 (Step S22). The controller 12 modifies the holding positions based on an input for modification from the user (Step S23). The controller 12 learns the contents of modification (Step S24). The controller 12 updates the weighting based on the result of learning (Step S25). After Step S25, the controller 12 terminates the process in the flowchart in FIG. 22.

As described above, the holding parameter estimation device 10 is capable of updating the weighting based on the contents of annotation from the user. As a result, it is possible to improve the robustness for various working environments.

The holding parameter estimation device 10 weights the multiple maps for combination to create the rule map. For example, the holding parameter estimation device 10 combines the multiple object maps 50 to create one object map 50. When the multiple maps are weighted for combination, the holding parameter estimation device 10 may update the weighting coefficient for each map through learning based on the annotation.

The holding parameter estimation device 10 may acquire the information concerning the annotation for the multiple holding positions to correct the appropriateness value based on the information concerning the annotation.

### <Creation of map based on image>

The holding parameter estimation device 10 may create the rule map based on the holding target image captured by the camera 4. The controller 12 in the holding parameter estimation device 10 may, for example, estimate the centroid of the holding object 80 based on the holding target image to create the object map 50 identifying the centroid position. The controller 12 may, for example, estimate the material of the holding object 80 based on the holding target image to create the contact map 60 identifying the frictional force exerted between the surface of the holding object 80 and the holder of the end effector 2B. The controller 12 may estimate the material of the holding object 80 based on information about the color, the pattern, or the irregularities of the holding object 80.

### <Setting of height of holding position>

The holding parameter estimation device 10 first sets the height at which the holding object 80 is held and estimates the opening width and the holding position at the set height. The holding parameter estimation device 10 may vary the height at which the holding object 80 is held and may perform the holding parameter estimation method at each height to estimate the combination of the holding height, the approach position 70, and the rotation angle, which has the highest total degree of coincidence, as the holding position with the opening width. This can improve the stability of the holding.

Although the embodiments of the holding parameter estimation device 10 are described above, an aspect of a storage medium on which the program is recorded (for example, an optical disk, an magneto-optical disk, a compact disc read only memory (CD-ROM), a compact disc readable (CD-R), a compact disc rewritable (CD-RW), a magnetic tape, a hard disk, a memory card, or the like) is available, in addition to the method or the program embodying the device, as the embodiments of the present disclosure.

The implementation of the program is not limited to an application program, such as object code compiled by a compiler or program code executed by an interpreter, and the program may be embodied by a program module or the like incorporated in an operating system. In addition, the program may be configured or may not be configured so that all the processes are performed only in a central processing unit (CPU) on a control substrate. The program may be configured, if needed, so that part of the program or the entire program is executed by an extension unit added to the substrate or another processing unit implemented in the extension unit.

The drawings describing the embodiments according to the present disclosure are schematically illustrated. The dimensions, the ratios, and the likes on the drawings do not necessarily coincide the practical ones.

Although the embodiments according to the present disclosure are described above based on the drawings and the examples, various variations or changes may be made by a person skilled in the art based on the present disclosure. Accordingly, these variations or changes are included in the scope of the present disclosure. For example, functions and so on included in the respective components or the likes are capable of being rearranged without logical inconsistency. The multiple components or the likes may be combined into one or may be divided.

All the components described in the present disclosure and/or all the methods or all the steps in the processes, which are disclosed, are capable of being arbitrarily combined unless the combinations of these features are mutually exclusive. Each of the features described in the present disclosure is capable of being replaced with an alternate feature for the same objective, an equivalent objective, or a similar objected unless explicitly denied. Accordingly, each of the disclosed features is only an example of a comprehensive series of the same features or equivalent features unless explicitly denied.

In addition, the embodiments according to the present disclosure are not limited to the specific configurations of the embodiments described above. The embodiments according to the present disclosure may be extended to all the new features or combinations of the features, which are described in the present disclosure, or all the new methods, all the steps in the processes, or combinations of the methods or the steps in the processes, which are described in the present disclosure.

In the present disclosure, description of "first", "second", and the like is an identifier for discriminating the corresponding component. The components discriminated with the description of "first", "second", and the like in the present disclosure may be replaced with the numbers of the components. For example, the "first" of the first area, which is the identifier, may be replaced with the "second", which is the identifier of the second area. The replacement of the identifiers is concurrently performed. The corresponding components are discriminated after the replacement of the identifiers. The identifiers may be deleted. The components from which the identifiers are deleted are discriminated with signs. The order of the components is not interpreted based on only the description of the identifiers, such as the "first" and the "second", in the present disclosure and the description of the identifiers, such as the "first" and the "second", is not used as the basis of the existence of the identifiers of smaller numbers.

### REFERENCE SIGNS

- 2: robot
- 2A: arm
- 2B: end effector
- 4: camera
- 5: operation range of robot
- 6: start working table
- 7: target working table
- 10: holding parameter estimation device
- 12: controller
- 14: interface
- 20: mask image
- 22: window
- 24: mask
- 30: end effector model
- 31: opening width model
- 32: holder position
- 34: stroke range
- 36: operation range of holder
- 38: out-of-operation range
- 40: surrounding environment map
- 41: approach area
- 42: object area
- 43: non-approach area
- 44: first area
- 50: object map
- 52: cross section
- 60: contact map
- 62: outer periphery
- 70: approach position
- 72a, 72b, 72c: projection model
- 74a, 74c: projection position of holder
- 80: holding object
- 81: main body
- 82: holding point
- 83: hook-shaped member
- 90: approach map
- 91: approach area
- 92: object area
- 93: non-approach area
- 94: first area
- 94ex: area resulting from expansion of first area
- 95: boundary
- 96: second area
- 96ex: area resulting from expansion of object area
- 97: obstacle area
- 98: external area
- 99: possible existence area
- 100: robot control system
- 110: robot control apparatus
- AL: moving straight line
- CP1: first center position
- C92: center of obj ect area
- SL: straight line passing through center of object area and intersecting with outer edge of obstacle area at one point
- WP: position of holder corresponding to opening width

## Claims

1. A holding parameter estimation device comprising:
an acquirer that acquires information concerning an end effector including a holder for holding a holding object with an arbitrary opening width, holding target information indicating the holding object, and depth data about the holding object; and
a controller that acquires an end effector model indicating an area in which the end effector can exist based on the information to estimate the opening width of the holder for the holding of the holding object by the holder based on the end effector model, the holding target information, and the depth data.

2. The holding parameter estimation device according to claim 1,
wherein the controller creates an approach map indicating an approach area in which the end effector can be opened without interference with an object other than the holding object at a height at which the holding object is held based on the holding target information and the depth data, and
wherein the controller estimates the opening width based on the approach area and the area in which the end effector can exist.

3. The holding parameter estimation device according to claim 2,
wherein the approach area is an area resulting from exclusion of an area in which the holding object exists and a first area that is directed to an opposite side of the holding object from an outer edge facing the holding object in an area in which an object other than the holding object exists from an area around the holding object, where the end effector can be opened without interference with the holding object.

4. The holding parameter estimation device according to claim 3,
wherein the end effector includes a holder to be in contact with the holding object in the holding of the holding object, and
wherein the approach area is an area achieved by excluding areas resulting from expansion of the area in which the holding object exists and the first area to sizes half or more of a width of the holder in a width direction of the holder of the end effector and to sizes half or more of a thickness of the holder in a thickness direction of the holder.

5. The holding parameter estimation device according to any of claims 2 to 4,
wherein the controller estimates a possible existence area in which the approach area is overlapped with the end effector model for each holder of the end effector in overlapping of the end effector model on the approach map, and
wherein the controller estimates an arbitrary point in the possible existence area of each holder as a position of the holder, which corresponds to the opening width in the possible existence area.

6. The holding parameter estimation device according to claim 5,
wherein the holder is movable in a certain direction,
wherein the controller calculates a first center position, which is a center position of the possible existence area for each holder of the end effector, and
wherein, when each holder is displaced toward the holding object from the first center position along the certain direction of the holder, the controller estimates an arbitrary position that does not interfere with the holding object and an object other than the holding object, in the area which the holder passes through until the holder reaches an end of the possible existence area, as the position of the holder corresponding to the opening width in the possible existence area.

7. The holding parameter estimation device according to claim 6,
wherein, if the first center position is deviated from a moving straight line that passes through the center position of the area in which the end effector can exist in the end effector model and that is parallel to an opening-closing direction of the holder, the controller assumes an intersecting point between a perpendicular from the first center position to the moving straight line and the moving straight line as the first center position to estimate the position of the holder corresponding to the opening width.

8. The holding parameter estimation device according to claim 6 or 7,
wherein, if the approach area does not exist upon displacement of the holder from the first center position toward the center position of the area in which the end effector can exist in the end effector model, the controller searches for the approach area in the possible existence area outside the first center position.

9. The holding parameter estimation device according to any of claims 2 to 8,
wherein the holder of the end effector is composed of at least two members that are opposed to each other and that are movable.

10. The holding parameter estimation device according to any of claims 1 to 9,
wherein the controller creates an opening width model identifying an area in which the end effector can exist within a range of the opening width,
wherein the controller creates a rule map including a map defining a position of the holding object used by the end effector for the holding based on the holding target information, and
wherein the controller estimates a position where the end effector is in contact with the holding object as a holding position based on the opening width model and the rule map.

11. The holding parameter estimation device according to claim 10,
wherein the holding position includes a plurality of holding positions and the controller calculates an appropriateness value representing appropriateness of the holding position for the plurality of holding positions based on the opening width model and the rule map to estimate the holding position based on the appropriateness value.

12. The holding parameter estimation device according to claim 11,
wherein the opening width model and the rule map are represented by values that are allocated to the respective positions and that indicate the appropriateness as the positions where the holding object is held, and
wherein the controller computes the values allocated to the respective positions when the opening width model is superimposed on the rule map to calculate the appropriateness values.

13. The holding parameter estimation device according to claim 11 or 12,
wherein the map includes a plurality of maps and the controller calculates the appropriateness value based on the rule map, based on the appropriateness value based on the plurality of maps included in the rule map and a map coefficient defined for each map.

14. A holding parameter estimation method comprising:
acquiring information concerning an end effector including a holder for holding a holding object, holding target information indicating the holding object, and depth data about the holding object;
acquiring an end effector model indicating an area in which the end effector can exist based on the information; and
estimating an opening width of the holder for the holding of the holding object by the holder based on the end effector model, the holding target information, and the depth data.
